# EUROPEAN PATENT APPLICATION

(11) **EP 3 509 255 A1**
(43) Date of publication of application: **10.07.2019**
(21) Application number: 17854673.5
(22) Date of filing: 11.09.2017
(51) Int. Cl.: H04L 12/70

(54) **COMMUNICATION METHOD AND DEVICE**

(30) Priority: 30.09.2016 CN 201610877310
(71) Applicant: Huawei Technologies Co., Ltd., Longgang District Shenzhen, Guangdong 518129 (CN)
(72) Inventor: HUANG, Qufang, Shenzhen Guangdong 518129 (CN); LIU, Jing, Shenzhen Guangdong 518129 (CN); HAN, Lifeng, Shenzhen Guangdong 518129 (CN); DAI, Mingzeng, Shenzhen Guangdong 518129 (CN); ZENG, Qinghai, Shenzhen Guangdong 518129 (CN)
(74) Representative: Maiwald Patent- und Rechtsanwaltsgesellschaft mbH
(86) International application number: PCT/CN2017/101264
(87) International publication number: WO 2018/059223

(57) **Abstract**

A communications method and apparatus are disclosed. The method includes: generating, by a terminal, first capability indication information, where the first capability indication information indicates that the terminal has a capability of processing out-of-order downlink data packets, or the first capability indication information indicates that the terminal has a capability of determining, based on a priority of a received downlink data packet, a priority of an uplink data packet corresponding to the downlink data packet, or the first capability indication information indicates that the terminal has a capability of processing out-of-order downlink data packets and a capability of determining, based on a priority of a received downlink data packet, a priority of an uplink data packet corresponding to the downlink data packet; and sending, by a first network device, the first capability indication information to the terminal.

## Description

This application claims priority to Chinese Patent Application No. 201610877310.0, filed with the China National Intellectual Property Administration on September 30, 2016 and entitled "COMMUNICATIONS METHOD AND APPARATUS", which is incorporated herein by reference in its entirety.

### TECHNICAL FIELD

This application relates to the field of communications technologies, and in particular, to a communications method and apparatus.

### BACKGROUND

In a radio communications system, data is transmitted based on a radio bearer (Resource Bearer, RB). The radio communications system divides data into one or more RBs based on QoS requirements of various applications. Currently, when devices such as a terminal and an access network device process data, the devices process data packets in order, to avoid garbled data.

With wide application of mobile communications systems, priorities of some service data need to be increased in case of some emergencies. To be specific, a current data packet processing order is broken, and a data packet having a high priority is preferentially processed. For example, once a health monitor carried by a senior citizen detects an emergency disease, a warning data packet sent by the health monitor needs to be preferentially processed.

However, whether a terminal has capabilities such as a capability of processing out-of-order data packets is unknown. If the terminal does not have the capabilities such as the capability of processing out-of-order data packets, the terminal cannot preferentially process out-of-order data packets. Therefore, currently, no solution for coordinating capability information between the terminal and an access network device is available yet.

### SUMMARY

Embodiments of this application provide a communications method and apparatus, to coordinate capability information between a terminal and an access network device.

An embodiment of this application provides a communications method, including:
generating, by a terminal, first capability indication information, where the first capability indication information indicates that the terminal has a capability of processing out-of-order downlink data packets, or the first capability indication information indicates that the terminal has a capability of determining, based on a priority of a received downlink data packet, a priority of an uplink data packet corresponding to the downlink data packet, or the first capability indication information indicates that the terminal has a capability of processing out-of-order downlink data packets and a capability of determining, based on a priority of a received downlink data packet, a priority of an uplink data packet corresponding to the downlink data packet; and
sending, by the terminal, the first capability indication information to a first network device.

According to the method, the terminal indicates a capability of the terminal to the first network device by using the first capability indication information, so that the first network device determines whether the terminal has the capability of processing out-of-order downlink data packets and the capability of determining, based on a priority of a received downlink data packet, a priority of an uplink data packet corresponding to the downlink data packet, and the first network device can send a downlink data packet to the terminal based on the capabilities of the terminal, thereby implementing more elaborative QoS management, and improving system efficiency.

Optionally, the method further includes:
receiving, by the terminal, a data packet priority configuration policy sent by a second network device, where the data packet priority configuration policy indicates that a priority of an uplink data packet of the terminal is a preset priority, or the data packet priority configuration policy indicates that a priority of an uplink data packet of the terminal is determined based on a priority of a downlink data packet of the terminal.

Optionally, the second network device is an access network device, and the method further includes:
receiving, by the terminal, second capability indication information sent by the second network device, where the second capability indication information indicates that the access network device has a capability of processing out-of-order uplink data packets.

Optionally, the second network device is an application server or a core network device, and the method further includes:
receiving, by the terminal, the second capability indication information sent by the access network device.

Optionally, the method further includes:
after the terminal determines that a priority of a target data packet is adjusted from a first priority to a second priority, if the terminal determines that a data packet sequence number of a data packet before the target data packet has been assigned and has not been sent through an air interface, assigning, by the terminal, a data packet sequence number to the target data packet, and sending, by the terminal, the target data packet based on a priority of each data packet.

According to the method, after the terminal determines that the data packet sequence number of the data packet before the target data packet has been assigned and has not been sent at the air interface, the terminal may assign a data packet sequence number to the target data packet, and send the target data packet based on the priority of each data packet, so that after the priority of the target data packet is adjusted, the terminal preferentially sends or delays sending the target data packet, and a data packet having a higher priority can be sent preferentially.

Optionally, the method further includes:
after the terminal determines that a priority of a target data packet is adjusted from a first priority to a second priority, if the terminal determines that a data packet sequence number of a data packet before the target data packet has not been assigned, assigning, by the terminal, a data packet sequence number to the target data packet based on a priority of each data packet, and sending, by the terminal, the target data packet based on a data packet sequence number of each data packet.

Optionally, the method further includes:
after the terminal determines that a priority of a target data packet is adjusted from a first priority to a second priority, adjusting a priority of a flow or a radio bearer RB at which the target data packet is located to the second priority.

Optionally, the method further includes:
receiving, by the terminal, data packet order configuration information sent by a core network device, where the data packet order configuration information indicates that among downlink data packets sent to the terminal, there are data packets that are sent out of order of data packet sequence numbers of the data packets.

An embodiment of this application provides a communications method, including:
receiving, by a first network device, first capability indication information sent by a terminal, where the first capability indication information indicates that the terminal has a capability of processing out-of-order downlink data packets, or the first capability indication information indicates that the terminal has a capability of determining, based on a priority of a received downlink data packet, a priority of an uplink data packet corresponding to the downlink data packet, or the first capability indication information indicates that the terminal has a capability of processing out-of-order downlink data packets and a capability of determining, based on a priority of a received downlink data packet, a priority of an uplink data packet corresponding to the downlink data packet; and
sending, by the first network device, a downlink data packet to the terminal based on the first capability indication information.

According to the method, the first network device determines, based on the first capability indication information, whether the terminal has the capability of processing the out-of-order downlink data packets and the capability of determining, based on a priority of a received downlink data packet, a priority of an uplink data packet corresponding to the downlink data packet, so that the first network device can send the downlink data packet to the terminal based on the capabilities of the terminal, thereby implementing more elaborative QoS management, and improving system efficiency.

Optionally, the first network device is an application server; and
after the receiving, by a first network device, first capability indication information sent by a terminal, the method further includes:
sending, by the first network device, submission order indication information to a core network device, where the submission order indication information indicates that downlink data packets sent to the terminal support out-of-order submission.

Optionally, the first network device is an application server; and
after the receiving, by a first network device, first capability indication information sent by a terminal, the method further includes:
sending, by the first network device, data packet order configuration information to the terminal, where the data packet order configuration information indicates that among downlink data packets sent to the terminal, there are data packets that are sent out of order of data packet sequence numbers of the data packets.

Optionally, the method further includes:
sending, by the first network device, a data packet priority configuration policy to the terminal, where the data packet priority configuration policy indicates that a priority of an uplink data packet of the terminal is a preset priority, or the data packet priority configuration policy indicates that a priority of an uplink data packet of the terminal is determined based on a priority of a downlink data packet of the terminal.

An embodiment of this application provides a communications method, including:
assigning, by a first access network device to the first access network device, a first tunnel endpoint identifier TEID used to receive a data packet sent by a second access network device; and
sending, by the first access network device, the first TEID to the second access network device.

According to the method, the first access network device sends the first TEID to the second access network device, so that the data packet sent by the second access network device can be received by using the first TEID.

Optionally, the method further includes:
sending, by the first access network device to the second access network device, a second TEID that is used by an evolved packet core device to receive an uplink data packet at an S1 interface.

According to the method, the first access network device sends, to the second access network device, the second TEID that is used by the evolved packet core device to receive the uplink data packet at the S1 interface, to establish a split bearer between the second access network device and the evolved packet core device, so that the second access network device is used as a data anchor. When the second access network device has a stronger processing capability, a data processing capability of an entire system can be improved.

Optionally, the method further includes:
sending, by the first access network device, split bearer indication information to the second access network device, where the split bearer indication information is used to indicate that a bearer corresponding to the second TEID is a new type of split bearer at the S1 interface and between the second access network device and the evolved packet core device.

Optionally, after the sending, by the first access network device, the first TEID to the second access network device, the method further includes:
receiving, by the first access network device, a third TEID sent by the second access network device, where the third TEID is a TEID that is used by the second access network device to receive a data packet sent by the first access network device.

Optionally, the method further includes:
receiving, by the first access network device, a fourth TEID sent by the second access network device, where the fourth TEID is a TEID that is used by the second access network device to receive a data packet sent by an evolved packet core device.

An embodiment of this application provides a communications method, including:
generating, by a first access network device, a request message including a first tunnel endpoint identifier TEID, where the first TEID is a TEID that is used by an evolved packet core device to receive a data packet sent by the second access network device, and the request message is used to instruct the second access network device to assign a second TEID that is used by the second access network device to receive a data packet sent by the evolved packet core device; and
sending, by the first access network device, the request message to the second access network device.

According to the method, the first access network device sends the first TEID to the second access network device, and instructs, by using the request message, the second access network device to assign the second TEID that is used by the second access network device to receive the data packet sent by the evolved packet core device, so as to instruct the second access network device to establish a split bearer between the second access network device and the evolved packet core device.

Optionally, after the sending, by the first access network device, the request message to the second access network device, the method further includes:
receiving, by the first access network device, the second TEID sent by the second access network device.

According to the method, the first access network device sends the second TEID to the second access network device, to establish the split bearer between the second access network device and the evolved packet core device, so that the second access network device is used as a data anchor. When the second access network device has a stronger processing capability, a data processing capability of an entire system can be improved.

Optionally, the method further includes:
sending, by the first access network device, the second TEID to the evolved packet core device.

An embodiment of this application provides a communication apparatus, including:
a processing unit, configured to generate first capability indication information, where the first capability indication information indicates that the terminal has a capability of processing out-of-order downlink data packets, or the first capability indication information indicates that the terminal has a capability of determining, based on a priority of a received downlink data packet, a priority of an uplink data packet corresponding to the downlink data packet, or the first capability indication information indicates that the terminal has a capability of processing out-of-order downlink data packets and a capability of determining, based on a priority of a received downlink data packet, a priority of an uplink data packet corresponding to the downlink data packet; and
a transceiver unit, configured to send the first capability indication information to a first network device.

Optionally, the transceiver unit is further configured to:
receive a data packet priority configuration policy sent by a second network device, where the data packet priority configuration policy indicates that a priority of an uplink data packet of the terminal is a preset priority, or the data packet priority configuration policy indicates that a priority of an uplink data packet of the terminal is determined based on a priority of a downlink data packet of the terminal.

Optionally, the second network device is an access network device, and the transceiver unit is further configured to:
receive second capability indication information sent by the second network device, where the second capability indication information indicates that the access network device has a capability of processing out-of-order uplink data packets.

Optionally, the second network device is an application server or a core network device, and the transceiver unit is further configured to:
receive the second capability indication information sent by the access network device.

Optionally, the transceiver unit is further configured to:
after determining that a priority of a target data packet is adjusted from a first priority to a second priority, if determining that a data packet sequence number of a data packet before the target data packet has been assigned and has not been sent through an air interface, assign a data packet sequence number to the target data packet, and send the target data packet based on a priority of each data packet.

Optionally, the transceiver unit is further configured to:
after determining that a priority of a target data packet is adjusted from a first priority to a second priority, if determining that a data packet sequence number of a data packet before the target data packet has not been assigned, assign a data packet sequence number to the target data packet based on a priority of each data packet, and send the target data packet based on a data packet sequence number of each data packet.

Optionally, the transceiver unit is further configured to:
after determining that a priority of a target data packet is adjusted from a first priority to a second priority, adjust a priority of a flow or a radio bearer RB at which the target data packet is located to the second priority.

Optionally, the transceiver unit is further configured to:
receive data packet order configuration information sent by a core network device, where the data packet order configuration information indicates that among downlink data packets sent to the terminal, there are data packets that are sent out of order of data packet sequence numbers of the data packets.

An embodiment of this application provides a communication apparatus, including:
a transceiver unit, configured to receive first capability indication information sent by a terminal, where the first capability indication information indicates that the terminal has a capability of processing out-of-order downlink data packets, or the first capability indication information indicates that the terminal has a capability of determining, based on a priority of a received downlink data packet, a priority of an uplink data packet corresponding to the downlink data packet, or the first capability indication information indicates that the terminal has a capability of processing out-of-order downlink data packets and a capability of determining, based on a priority of a received downlink data packet, a priority of an uplink data packet corresponding to the downlink data packet; and
a processing unit, configured to send a downlink data packet to the terminal based on the first capability indication information.

Optionally, the apparatus is an application server; and
the transceiver unit is further configured to:
send submission order indication information to a core network device, where the submission order indication information indicates that downlink data packets sent to the terminal support out-of-order submission.

Optionally, the apparatus is an application server; and
the transceiver unit is further configured to:
send data packet order configuration information to the terminal, where the data packet order configuration information indicates that among downlink data packets sent to the terminal, there are data packets that are sent out of order of data packet sequence numbers of the data packets.

Optionally, the transceiver unit is further configured to:
send a data packet priority configuration policy to the terminal, where the data packet priority configuration policy indicates that a priority of an uplink data packet of the terminal is a preset priority, or the data packet priority configuration policy indicates that a priority of an uplink data packet of the terminal is determined based on a priority of a downlink data packet of the terminal.

An embodiment of this application provides a communication apparatus, including:
a processing unit, configured to assign, to the first access network device, a first tunnel endpoint identifier TEID used to receive a data packet sent by a second access network device; and
a transceiver unit, configured to send the first TEID to the second access network device.

Optionally, the transceiver unit is further configured to:
send, to the second access network device, a second TEID that is used by an evolved packet core device to receive an uplink data packet at an S1 interface.

Optionally, the transceiver unit is further configured to:
send split bearer indication information to the second access network device, where the split bearer indication information is used to indicate that a bearer corresponding to the second TEID is a new type of split bearer at the S 1 interface and between the second access network device and the evolved packet core device.

Optionally, the transceiver unit is further configured to:
receive a third TEID sent by the second access network device, where the third TEID is a TEID that is used by the second access network device to receive a data packet sent by the first access network device.

Optionally, the transceiver unit is further configured to:
receive a fourth TEID sent by the second access network device, where the fourth TEID is a TEID that is used by the second access network device to receive a data packet sent by the evolved packet core device.

An embodiment of this application provides a communication apparatus, including:
a processing unit, configured to generate a request message including a first tunnel endpoint identifier TEID, where the first TEID is a TEID that is used by an evolved packet core device to receive a data packet sent by the second access network device, and the request message is used to instruct the second access network device to assign a second TEID that is used by the second access network device to receive a data packet sent by the evolved packet core device; and
a transceiver unit, configured to send the request message to the second access network device.

Optionally, the transceiver unit is further configured to:
receive the second TEID sent by the second access network device.

Optionally, the transceiver unit is further configured to:
send the second TEID to the evolved packet core device.

An embodiment of this application provides a communication apparatus, including:
a processor, configured to generate first capability indication information, where the first capability indication information indicates that the terminal has a capability of processing out-of-order downlink data packets, or the first capability indication information indicates that the terminal has a capability of determining, based on a priority of a received downlink data packet, a priority of an uplink data packet corresponding to the downlink data packet, or the first capability indication information indicates that the terminal has a capability of processing out-of-order downlink data packets and a capability of determining, based on a priority of a received downlink data packet, a priority of an uplink data packet corresponding to the downlink data packet; and
a transceiver, configured to send the first capability indication information to a first network device.

Optionally, the transceiver is further configured to:
receive a data packet priority configuration policy sent by a second network device, where the data packet priority configuration policy indicates that a priority of an uplink data packet of the terminal is a preset priority, or the data packet priority configuration policy indicates that a priority of an uplink data packet of the terminal is determined based on a priority of a downlink data packet of the terminal.

Optionally, the second network device is an access network device, and the transceiver is further configured to:
receive second capability indication information sent by the second network device, where the second capability indication information indicates that the access network device has a capability of processing out-of-order uplink data packets.

Optionally, the second network device is an application server or a core network device, and the transceiver is further configured to:
receive the second capability indication information sent by the access network device.

Optionally, the transceiver is further configured to:
after determining that a priority of a target data packet is adjusted from a first priority to a second priority, if determining that a data packet sequence number of a data packet before the target data packet has been assigned and has not been sent through an air interface, assign a data packet sequence number to the target data packet, and send the target data packet based on a priority of each data packet.

Optionally, the transceiver is further configured to:
after determining that a priority of a target data packet is adjusted from a first priority to a second priority, if determining that a data packet sequence number of a data packet before the target data packet has not been assigned, assign a data packet sequence number to the target data packet based on a priority of each data packet, and send the target data packet based on a data packet sequence number of each data packet.

Optionally, the transceiver is further configured to:
after determining that a priority of a target data packet is adjusted from a first priority to a second priority, adjust a priority of a flow or a radio bearer RB at which the target data packet is located to the second priority.

Optionally, the transceiver is further configured to:
receive data packet order configuration information sent by a core network device, where the data packet order configuration information indicates that among downlink data packets sent to the terminal, there are data packets that are sent out of order of data packet sequence numbers of the data packets.

An embodiment of this application provides a communication apparatus, including:
a transceiver, configured to receive first capability indication information sent by a terminal, where the first capability indication information indicates that the terminal has a capability of processing out-of-order downlink data packets, or the first capability indication information indicates that the terminal has a capability of determining, based on a priority of a received downlink data packet, a priority of an uplink data packet corresponding to the downlink data packet, or the first capability indication information indicates that the terminal has a capability of processing out-of-order downlink data packets and a capability of determining, based on a priority of a received downlink data packet, a priority of an uplink data packet corresponding to the downlink data packet; and
a processor, configured to send a downlink data packet to the terminal based on the first capability indication information.

Optionally, the apparatus is an application server; and
the transceiver is further configured to:
send submission order indication information to a core network device, where the submission order indication information indicates that downlink data packets sent to the terminal support out-of-order submission.

Optionally, the apparatus is an application server; and
the transceiver is further configured to:
send data packet order configuration information to the terminal, where the data packet order configuration information indicates that among downlink data packets sent to the terminal, there are data packets that are sent out of order of data packet sequence numbers of the data packets.

Optionally, the transceiver is further configured to:
send a data packet priority configuration policy to the terminal, where the data packet priority configuration policy indicates that a priority of an uplink data packet of the terminal is a preset priority, or the data packet priority configuration policy indicates that a priority of an uplink data packet of the terminal is determined based on a priority of a downlink data packet of the terminal.

An embodiment of this application provides a communication apparatus, including:
a processor, configured to assign, to the first access network device, a first tunnel endpoint identifier TEID used to receive a data packet sent by a second access network device; and
a transceiver, configured to send the first TEID to the second access network device.

Optionally, the transceiver is further configured to:
send, to the second access network device, a second TEID that is used by an evolved packet core device to receive an uplink data packet at an S1 interface.

Optionally, the transceiver is further configured to:
send split bearer indication information to the second access network device, where the split bearer indication information is used to indicate that a bearer corresponding to the second TEID is a new type of split bearer at the S1 interface and between the second access network device and the evolved packet core device.

Optionally, the transceiver is further configured to:
receive a third TEID sent by the second access network device, where the third TEID is a TEID that is used by the second access network device to receive a data packet sent by the first access network device.

Optionally, the transceiver unit is further configured to:
receive a fourth TEID sent by the second access network device, where the fourth TEID is a TEID that is used by the second access network device to receive a data packet sent by the evolved packet core device.

An embodiment of this application provides a communication apparatus, including:
a processor, configured to generate a request message including a first tunnel endpoint identifier TEID, where the first TEID is a TEID that is used by an evolved packet core device to receive a data packet sent by the second access network device, and the request message is used to instruct the second access network device to assign a second TEID that is used by the second access network device to receive a data packet sent by the evolved packet core device; and
a transceiver, configured to send the request message to the second access network device.

Optionally, the transceiver is further configured to:
receive the second TEID sent by the second access network device.

Optionally, the transceiver is further configured to:
send the second TEID to the evolved packet core device.

An embodiment of this application provides a computer-readable storage medium. The computer storage medium stores a computer-readable instruction. When a computer reads and executes the computer-readable instruction, the computer is caused to perform the method according to any one of the foregoing aspects or any one of the possible designs of the foregoing aspects.

An embodiment of this application provides a computer program product. When a computer reads and executes the computer program product, the computer is caused to perform the method according to any one of the foregoing aspects or any one of the possible designs of the foregoing aspects.

An embodiment of this application provides a chip. The chip is connected to a memory, and is configured to read and execute a software program stored in the memory, to implement the method according to any one of the foregoing aspects or any one of the possible designs of the foregoing aspects.

### BRIEF DESCRIPTION OF DRAWINGS

FIG. 1 is a schematic flowchart of a communications method according to an embodiment of this application;
FIG. 2 is a schematic flowchart of a communications method according to an embodiment of this application;
FIG. 3 is a schematic flowchart of a communications method according to an embodiment of this application;
FIG. 4 is a schematic flowchart of a communications method according to an embodiment of this application;
FIG. 5 is a schematic flowchart of a communications method according to an embodiment of this application;
FIG. 6 is a schematic diagram of a network architecture in the prior art;
FIG. 7 is a schematic flowchart of a communications method according to an embodiment of this application;
FIG. 8 is a schematic flowchart of a communications method according to an embodiment of this application;
FIG. 9 is a schematic diagram of a network architecture in the prior art;
FIG. 10 is a schematic flowchart of a communications method according to an embodiment of this application;
FIG. 11 is a schematic flowchart of a communications method according to an embodiment of this application;
FIG. 12 is a schematic structural diagram of a communication apparatus according to an embodiment of this application;
FIG. 13 is a schematic structural diagram of a communication apparatus according to an embodiment of this application;
FIG. 14 is a schematic structural diagram of a communication apparatus according to an embodiment of this application;
FIG. 15 is a schematic structural diagram of a communication apparatus according to an embodiment of this application;
FIG. 16 is a schematic structural diagram of a communication apparatus according to an embodiment of this application;
FIG. 17 is a schematic structural diagram of a communication apparatus according to an embodiment of this application;
FIG. 18 is a schematic structural diagram of a communication apparatus according to an embodiment of this application; and
FIG. 19 is a schematic structural diagram of a communication apparatus according to an embodiment of this application.

### DESCRIPTION OF EMBODIMENTS

Embodiments of this application are applicable to an LTE (Long Term Evolution, Long Term Evolution) system and a mobile communications system such as a 5G mobile communications system.

In the following, some terms in this application are described, so as to help persons skilled in the art have a better understanding.
(1) A terminal, also referred to as user equipment (User Equipment, UE), is a device providing speech and/or data connectivity to a user, for example, a handheld device or an in-vehicle device having a wireless connection function. A common terminal includes, for example, a mobile phone, a tablet computer, a notebook computer, a palmtop computer, a mobile Internet device (mobile Internet device, MID), and a wearable device such as a smartwatch, a smart band, or a pedometer.
(2) An access network device, also referred to as a base station, is a device connecting a terminal to a wireless network, and includes, but is not limited to, an evolved NodeB (evolved NodeB, eNB), a radio network controller (radio network controller, RNC), a NodeB (NodeB, NB), a base station controller (Base Station Controller, BSC), a base transceiver station (Base Transceiver Station, BTS), a home base station (for example, a Home evolved NodeB, or a Home NodeB, HNB), and a baseband unit (BaseBand Unit, BBU), and moreover, may further include a Wi-Fi access point (Access Point, AP), and the like.
   It should be noted that, in the embodiments of this application, the access network device may include functional entities such as a data unit (data unit, DU) and a control unit (control unit, CU).
(3) In the embodiments of this application, a radio bearer (radio bear, RB) may be divided into a plurality of flows (flow), and a data packet of each flow may have a different quality of service (Quality of Service, QoS) parameter.
(4) An S1 interface is a standard interface between an access network device and a core network device (for example, an MME (Mobility Management Entity, mobility management entity)). The S1 interface may include a plurality of interfaces, for example, may include an SI-MME interface and an S1-U interface. The access network device is connected to an S-GW (Serving GateWay, serving gateway) by using the S1-U interface, and is used for user data transmission. The access network device is connected to the MME by using the S1-MME interface, and is configured to control signaling transmission.
(5) An X2 interface is a standard interface between one access network device and another access network device, and is configured to implement interworking between the access network devices.
(6) A Uu interface is a wireless interface between a terminal and an access network device. The terminal accesses a network by using the Uu interface.

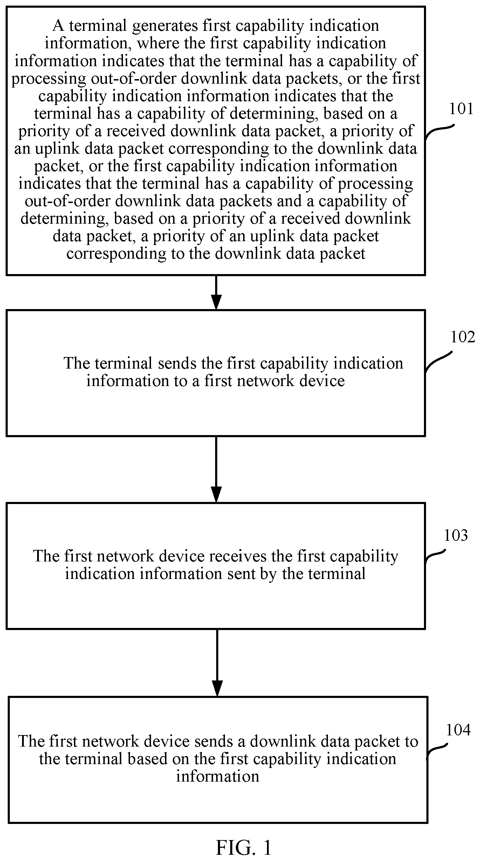

Based on the foregoing descriptions, FIG. 1 is a schematic flowchart of a communications method according to an embodiment of this application.

Referring to FIG. 1, the method includes the following steps.

Step 101. A terminal generates first capability indication information, where the first capability indication information indicates that the terminal has a capability of processing out-of-order downlink data packets, or the first capability indication information indicates that the terminal has a capability of determining, based on a priority of a received downlink data packet, a priority of an uplink data packet corresponding to the downlink data packet, or the first capability indication information indicates that the terminal has a capability of processing out-of-order downlink data packets and a capability of determining, based on a priority of a received downlink data packet, a priority of an uplink data packet corresponding to the downlink data packet.

It should be noted that, "having the capability of processing out-of-order downlink data packets" in this embodiment of this application may mean that the terminal has, in one session (session), the capability of processing out-of-order downlink data packets; has, in one flow, the capability of processing out-of-order downlink data packets; or has, in one RB, the capability of processing out-of-order downlink data packets.

"Having the capability of determining, based on a priority of a received downlink data packet, a priority of an uplink data packet corresponding to the downlink data packet" in this embodiment of this application may mean that the terminal has, in one session, one flow, or one RB, the capability of determining, based on a priority of a received downlink data packet, a priority of an uplink data packet corresponding to the downlink data packet.

Step 102. The terminal sends the first capability indication information to a first network device.

Step 103. The first network device receives the first capability indication information sent by the terminal.

Step 104. The first network device sends a downlink data packet to the terminal based on the first capability indication information.

In this embodiment of this application, the first network device and a second network device may have a plurality of forms. The first network device and the second network device may be a same device, or may be different devices. The two cases are separately described below.

In a first possible scenario, the first network device is an application server, and the second network device is an access network device.

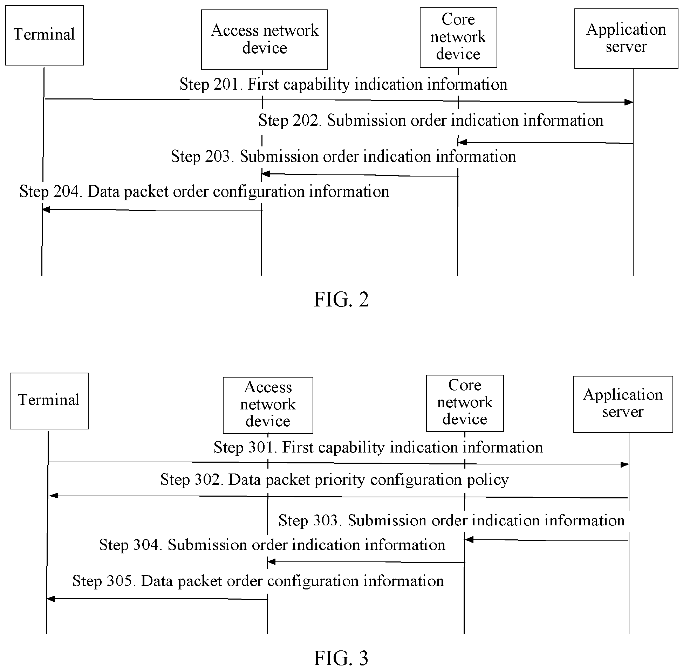

Specifically, FIG. 2 is a schematic flowchart of a communications method according to an embodiment of this application. In FIG. 2, an application server is a first network device, and an access network device is a second network device.

Step 201. A terminal sends first capability indication information to the application server.

The terminal may send the first capability indication information by using a service request message sent to the application server, where the service request message is used to request the application server for service data. Alternatively, the terminal may send the first capability indication information by using a dedicated message. This is not limited in this embodiment of this application.

It should be noted that the first capability indication information is determined based on the terminal based on a capability of the terminal. A specific form of the first capability indication information is not limited in this embodiment of this application.

Step 202. The application server sends submission order indication information to a core network device, where the submission order indication information indicates that downlink data packets sent to the terminal support out-of-order submission.

For example, after receiving the service request message that is sent by the terminal and that includes the first capability indication information, the application server determines to send the submission order indication information to the core network device by providing the service data to the terminal and by using a session start (session start) request message.

The application server indicates, by using the submission order indication information, that downlink data packets sent to the terminal may be submitted out of order, thereby implementing more elaborative QoS management between the terminal and the application server.

Optionally, if the first capability indication information indicates that the terminal has a capability of determining, based on a priority of a received downlink data packet, a priority of an uplink data packet corresponding to the downlink data packet, in this step, the application server may further indicate, to the core network device, that the terminal has the capability of determining, based on a priority of a received downlink data packet, a priority of an uplink data packet corresponding to the downlink data packet. A specific indication manner of the application server is not limited herein.

Step 203. The core network device sends the submission order indication information to the access network device.

It should be noted that if the access network device includes a DU and a CU, the core network device may send the submission order indication information to the CU of the access network device. If a Radio Resource Control (Radio Resource Control, RRC) entity or a radio resource management (Radio Resource Management, RRM) entity that is of the access network device and that corresponds to the terminal is in the DU, the core network device may send the submission order indication information to the DU of the access network device.

Optionally, if the first capability indication information indicates that the terminal has a capability of determining, based on a priority of a received downlink data packet, a priority of an uplink data packet corresponding to the downlink data packet, in this step, the core network device may further indicate, to the access network device, that the terminal has the capability of determining, based on a priority of a received downlink data packet, a priority of an uplink data packet corresponding to the downlink data packet.

Step 204. The terminal receives data packet order configuration information sent by the access network device, where the data packet order configuration information indicates that among downlink data packets sent to the terminal, there are data packets that are sent out of order of data packet sequence numbers of the data packets. The data packet sequence number may be a PDCP SN (Sequence Number, sequence number), or a sequence having a similar function to a PDCP SN.

It should be noted that "data packets that are sent out of order of data packet sequence numbers of the data packets" in this embodiment of this application may mean that the access network device may not send data packets in order of data packet sequence numbers of the data packets in one session, may not send data packets in order of data packet sequence numbers of the data packets in one flow, or may not send data packets in order of data packet sequence numbers of the data packets in one RB.

Optionally, in this step, the terminal may further receive second capability indication information sent by the access network device, where the second capability indication information indicates that the access network device has a capability of processing out-of-order uplink data packets. After receiving the second capability indication information, the terminal may submit uplink data packets to the access network device out of order.

It should be noted that "having the capability of processing out-of-order uplink data packets" in this embodiment of this application may mean that the access network device has, in one session, the capability of processing out-of-order uplink data packets; has, in one flow, the capability of processing out-of-order uplink data packets; or has, in one RB, the capability of processing out-of-order uplink data packets.

Further, in this step, the terminal may further receive a data packet priority configuration policy sent by the access network device, where the data packet priority configuration policy indicates that a priority of an uplink data packet of the terminal is a preset priority, or the data packet priority configuration policy indicates that a priority of an uplink data packet of the terminal is determined based on a priority of a downlink data packet of the terminal.

There may be two implementations for indicating, by the data packet priority configuration policy, that the priority of the uplink data packet of the terminal is determined based on the priority of the downlink data packet of the terminal. In one implementation, the data packet priority configuration policy may indicate that the priority of the uplink data packet of the terminal is the same as the priority of the downlink data packet of the terminal. For example, when the priority of the downlink data packet of the terminal at a flow or an RB is A, the data packet priority configuration policy may indicate that the priority of the uplink data packet of the terminal at this flow or this RB is also A.

It should be noted that in this step, the data packet priority configuration policy is possibly not determined by the access network device. There are two possible implementations herein:
In a first possible implementation, the application server determines the data packet priority configuration policy; then, the application server sends the data packet priority configuration policy to the core network device; the core network device sends the data packet priority configuration policy to the access network device; and finally, the access network device sends the data packet priority configuration policy to the terminal.
In a second possible implementation, the core network device determines the data packet priority configuration policy; then, the core network device sends the data packet priority configuration policy to the access network device; and finally, the access network device sends the data packet priority configuration policy to the terminal.

In another implementation, the data packet priority configuration policy may alternatively indicate that the priority of the uplink data packet of the terminal is a priority corresponding to a priority identifier carried in the downlink data packet of the terminal. For example, if the priority of the downlink data packet of the terminal at a flow or an RB is A, the priority corresponding to the priority identifier carried in the downlink data packet at the flow or the RB is B, and the data packet priority configuration policy may indicate that the priority of the uplink data packet of the terminal at the flow or the RB is B, that is, the priority corresponding to the priority identifier carried in the downlink data packet at the flow or the RB is B. It should be noted that a mapping relationship between A and B herein needs to be configured for the terminal in advance, and a specific configuration manner is not limited.

In a second possible scenario, the first network device is an application server, and the second network device is also an application server.

Specifically, FIG. 3 is a schematic flowchart of a communications method according to an embodiment of this application. In FIG. 3, each of the first network device and the second network device is an application server.

Step 301. A terminal sends first capability indication information to the application server.

For specific content of step 301, refer to descriptions of step 201 and the like. Details are not described herein again.

Step 302. The application server sends a data packet priority configuration policy to the terminal.

The data packet priority configuration policy indicates that a priority of an uplink data packet of the terminal is a preset priority, or the data packet priority configuration policy indicates that a priority of an uplink data packet of the terminal is determined based on a priority of a downlink data packet of the terminal, for example, the foregoing mapping relationship between A and B.

Step 303. The application server sends submission order indication information to a core network device, where the submission order indication information indicates that downlink data packets sent to the terminal support out-of-order submission.

The application server may initiate a request message through a session, to send the submission order indication information to the core network device.

Optionally, if the first capability indication information indicates that the terminal has a capability of determining, based on a priority of a received downlink data packet, a priority of an uplink data packet corresponding to the downlink data packet, in this step, the application server may further indicate, to the core network device, that the terminal has the capability of determining, based on a priority of a received downlink data packet, a priority of an uplink data packet corresponding to the downlink data packet. A specific indication manner of the application server is not limited herein.

It should be noted that an order in which step 302 and step 303 are performed is not limited in this embodiment of this application. Alternatively, the application server may perform sending by using a same message.

Step 304. The core network device sends the submission order indication information to an access network device.

It should be noted that if the access network device includes a DU and a CU, the core network device may send the submission order indication information to the CU of the access network device. If a management entity managing an in-order submission function, an RRC entity, or an RRM entity that is of the access network device and that corresponds to the terminal is in the DU, the core network device may send the submission order indication information to the DU of the access network device.

Optionally, if the first capability indication information indicates that the terminal has a capability of determining, based on a priority of a received downlink data packet, a priority of an uplink data packet corresponding to the downlink data packet, in this step, the core network device may further indicate, to the access network device, that the terminal has the capability of determining, based on a priority of a received downlink data packet, a priority of an uplink data packet corresponding to the downlink data packet.

Step 305. The terminal receives data packet order configuration information sent by the access network device.

Optionally, in this step, the terminal may further receive second capability indication information sent by the access network device. After receiving the second capability indication information, the terminal may submit uplink data packets to the access network device out of order. For specific content of the data packet order configuration information and the second capability indication information, refer to the foregoing descriptions. Details are not described herein again.

It should be noted that it merely indicates herein that the terminal may send uplink data packets to the access network device out of order, and the terminal determines, based on an actual situation, whether to submit uplink data packets to the access network device out of order. To be specific, the terminal may submit uplink data packets to the access network device in order or out of order. The foregoing descriptions are also applicable to the access network device. Details are not described herein again. The order herein is an order in which the terminal receives data packets from an access stratum to a non-access stratum of the terminal.

In a third possible scenario, the first network device is an application server, and the second network device is a core network device.

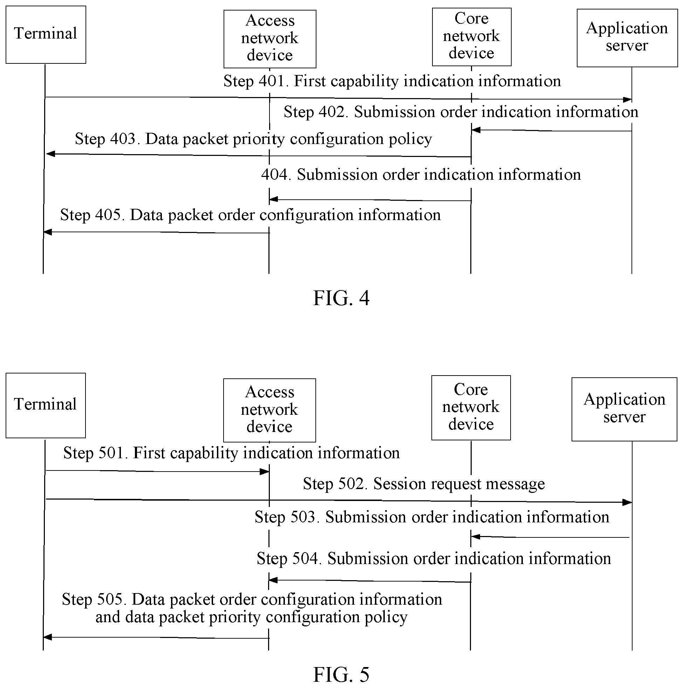

Specifically, FIG. 4 is a schematic flowchart of a communications method according to an embodiment of this application. In FIG. 4, an application server is a first network device, and a core network device is a second network device.

Step 401. A terminal sends first capability indication information to the application server.

For specific content of step 401, refer to descriptions of step 201 and the like. Details are not described herein again.

Step 402. The application server sends submission order indication information to a core network device, where the submission order indication information indicates that downlink data packets sent to the terminal support out-of-order submission.

The application server may initiate a request message through a session, to send the submission order indication information to the core network device.

Optionally, if the first capability indication information indicates that the terminal has a capability of determining, based on a priority of a received downlink data packet, a priority of an uplink data packet corresponding to the downlink data packet, in this step, the application server may further indicate, to the core network device, that the terminal has the capability of determining, based on a priority of a received downlink data packet, a priority of an uplink data packet corresponding to the downlink data packet. A specific indication manner of the application server is not limited herein.

Step 403. The core network device sends a data packet priority configuration policy to the terminal.

The data packet priority configuration policy indicates that a priority of an uplink data packet of the terminal is a preset priority, or the data packet priority configuration policy indicates that a priority of an uplink data packet of the terminal is determined based on a priority of a downlink data packet of the terminal.

Step 404. The core network device sends the submission order indication information to an access network device.

It should be noted that if the access network device includes a DU and a CU, the core network device may send the submission order indication information to the CU of the access network device. If a management entity managing an in-order submission function, an RRC entity, or an RRM entity that is of the access network device and that corresponds to the terminal is in the DU, the core network device may send the submission order indication information to the DU of the access network device.

Optionally, if the first capability indication information indicates that the terminal has a capability of determining, based on a priority of a received downlink data packet, a priority of an uplink data packet corresponding to the downlink data packet, in this step, the core network device may further indicate, to the access network device, that the terminal has the capability of determining, based on a priority of a received downlink data packet, a priority of an uplink data packet corresponding to the downlink data packet.

It should be noted that an order in which step 403 and step 404 are performed is not limited in this embodiment of this application.

Step 405. The terminal receives data packet order configuration information sent by the access network device.

Optionally, in this step, the terminal may further receive second capability indication information sent by the access network device. After receiving the second capability indication information, the terminal may submit uplink data packets to the access network device out of order. For specific content of the data packet order configuration information and the second capability indication information, refer to the foregoing descriptions. Details are not described herein again.

In a fourth possible scenario, the first network device is an access network device.

Specifically, FIG. 5 is a schematic flowchart of a communications method according to an embodiment of this application. In FIG. 5, an access network device is a first network device.

Step 501. A terminal sends first capability indication information to the access network device.

For specific content of step 501, refer to descriptions of step 201 and the like. Details are not described herein again.

Step 502. The terminal sends a session request message to an application server.

Step 503. The application server sends submission order indication information to a core network device, where the submission order indication information indicates that downlink data packets sent to the terminal support out-of-order submission.

The application server may initiate a request message through a session, to send the submission order indication information to the core network device.

Optionally, if the first capability indication information indicates that the terminal has a capability of determining, based on a priority of a received downlink data packet, a priority of an uplink data packet corresponding to the downlink data packet, in this step, the application server may further indicate, to the core network device, that the terminal has the capability of determining, based on a priority of a received downlink data packet, a priority of an uplink data packet corresponding to the downlink data packet. A specific indication manner of the application server is not limited herein.

Step 504. The core network device sends the submission order indication information to the access network device.

It should be noted that if the access network device includes a DU and a CU, the core network device may send the submission order indication information to the CU of the access network device. If a management entity managing an in-order submission function, an RRC entity, or an RRM entity that is of the access network device and that corresponds to the terminal is in the DU, the core network device may send the submission order indication information to the DU of the access network device.

Optionally, if the first capability indication information indicates that the terminal has a capability of determining, based on a priority of a received downlink data packet, a priority of an uplink data packet corresponding to the downlink data packet, in this step, the core network device may further indicate, to the access network device, that the terminal has the capability of determining, based on a priority of a received downlink data packet, a priority of an uplink data packet corresponding to the downlink data packet.

Step 505. The terminal receives data packet order configuration information and a data packet priority configuration policy that are sent by the access network device.

Optionally, in this step, the terminal may further receive second capability indication information sent by the access network device. After receiving the second capability indication information, the terminal may submit uplink data packets to the access network device out of order. For specific content of the data packet order configuration information, the data packet priority configuration policy, and the second capability indication information, refer to the foregoing descriptions. Details are not described herein again.

With reference to the descriptions of FIG. 2 to FIG. 5, after the terminal receives one or more of the data packet order configuration information, the data packet priority configuration policy, and the second capability indication information, the terminal and the access network device may process out-of-order data packets in the following manners.

First, the access network device has a capability of processing out-of-order uplink data packets.

When the access network device has the capability of processing out-of-order uplink data packets, if the access network device uses a dynamic priority on a terminal side, the access network device may use a default priority for a data packet in an RB, or may use a priority different from a default priority for a data packet in an RB. In this case, when processing one or more uplink data packets, an access system (Access Stratum, AS) stratum of the terminal needs to determine a priority of each data packet.

The AS stratum of the terminal may determine a priority of each uplink data packet in two manners:
(1) notifying, by an application layer of the terminal, the access system AS stratum of the terminal of a priority of each data packet by using a primitive; and
(2) adding, by the application layer of the terminal, a priority identifier to each uplink data packet, to indicate a priority of the uplink data packet.

With reference to the foregoing descriptions, in a possible implementation, after the terminal determines that a priority of a target data packet is adjusted from a first priority to a second priority, if the terminal determines that a data packet sequence number of a data packet before the target data packet has been assigned and has not been sent through an air interface, the terminal assigns a data packet sequence number to the target data packet, and sends the target data packet based on a priority of each data packet. The target data packet is any uplink data packet that needs to be sent by the terminal.

The terminal sends the target data packet based on a priority of each data packet, and may preferentially send a data packet having a high priority.

For example, the second priority is higher than the first priority, and the second priority is lower than a third priority. The data packet sequence number of the data packet before the target data packet has been assigned and has not been sent at the air interface. After determining that the priority of the target data packet is adjusted from the first priority to the second priority, the terminal assigns the data packet sequence number to the target data packet. In this case, if the terminal determines that the priority of the data packet before the target data packet is the first priority, the terminal preferentially sends the target data. In this case, if receiving the target data first, the access network device may first submit the target data to a previous entity for processing. If the terminal determines that the priority of the data packet before the target data packet is the third priority, the terminal preferentially sends the data packet before the target data.

In another possible implementation, after the terminal determines that a priority of a target data packet is adjusted from a first priority to a second priority, if the terminal determines that a data packet sequence number of a data packet before the target data packet has not been assigned, the terminal assigns a data packet sequence number to the target data packet based on a priority of each data packet, and sends the target data packet based on a data packet sequence number of each data packet.

When assigning the data packet sequence number to the target data packet based on a priority of each data packet, the terminal preferentially assigns a data packet sequence number to a data packet having a high priority.

Correspondingly, when sending the target data packet based on a data packet sequence number of each data packet, the terminal or the access network device may preferentially send a data packet to which a data packet sequence number is preferentially assigned. For example, for a data packet 1 and data packet 2, if a data packet sequence number is assigned to the data packet 1 first, and a data packet sequence number is assigned to the data packet 2 later, the data packet 1 is preferentially sent with respect to the data packet 2. Therefore, after the terminal preferentially assigns a data packet sequence number to a data packet having a high priority, the data packet having a high priority is preferentially sent. It should be noted that if the second priority is higher than the first priority, the terminal may determine priorities of all data packets before the target data packet as the first priority.

It should be noted that the terminal may determine, by using the AS stratum of the terminal, whether the priority of the target data packet is adjusted. For a manner for determining a priority of a data packet by the AS stratum of the terminal, refer to the foregoing descriptions.

In this embodiment of this application, when the terminal has the capability of processing out-of-order downlink data packets, the access network device may also process a downlink data packet based on the foregoing method, except that an execution body of the method is changed from the terminal to the access network device. Details are not described herein again.

Second, the access network device does not have a capability of processing out-of-order uplink data packets.

If the access network device does not have the capability of processing out-of-order uplink data packets, a previous stratum of the access network device requires that the AS stratum strictly ensures in-order submission. After determining that the priority of the target data packet is adjusted from the first priority to the second priority, the AS stratum of the terminal also needs to temporarily adjust a priority of a flow or an RB at which the target data packet is located to the second priority. Then, the data packet before the target data is sent in order. Subsequently, the target data is sent. After the terminal finishes sending the target data packet, if the terminal finds that there is no data packet having the second priority after the target data packet or receives a previous-stratum indication that "there is no data packet having the second priority after the target data packet", the terminal restores the priority of the flow or the RB at which the target data packet is located to an original priority. Alternatively, after the terminal finishes sending the target data packet and receives an acknowledgment message from a recipient, the terminal restores the priority of the flow or the RB at which the target data packet is located to an original priority.

It should be noted that the priority of the flow or RB may be specifically represented by one or more of the following parameters:
a logical channel priority;
a prioritized bit rate (prioritised Bit Rate); and
bucket size duration (bucket Size Duration, BSD).

In a process of sending the target data packet, because the data packet has a high priority, the priority of the data packet before the target data packet is also adjusted to the second priority.

In addition, when determining that a data packet having a higher priority arrives at the flow or the RB at which the shown target data packet is located, the terminal triggers a resource request, to request the access network device for a radio resource. For example, the terminal sends an uplink scheduling request (Scheduling Request, SR) or a buffer status report (Buffer Status Report, BSR) to the access network device.

When the terminal sends the SR or the BSR to the access network device, a size of a data packet having a high priority may be particularly indicated, or a total size of all data packets (including the data packet having the high priority) before the data packet having the high priority may be indicated.

In addition, a priority identifier of a data packet can also be carried in a data packet header, so that another entity on a network side performs different processing on the data packet.

In this embodiment of this application, when the terminal does not have the capability of processing out-of-order downlink data packets, the access network device may also process a downlink data packet based on the foregoing method, except that an execution body of the method is changed from the terminal to the access network device. Details are not described herein again.

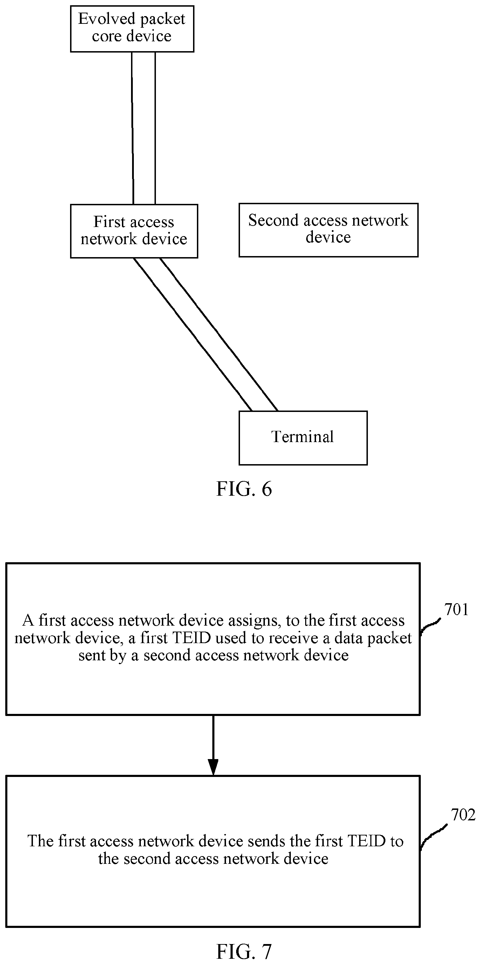

FIG. 6 is a schematic diagram of a network architecture in the prior art. In FIG. 6, a first access network device is a primary access network device, and a split bearer (split bear) exists between the first access network device and an evolved packet core (Evolved Packet Core, EPC) device. A second access network device is a secondary access network device, and no tunnel exists between the first access network device and the second access network device, in other words, the first access network device does not have a tunnel endpoint identifier (Tunnel Endpoint Identifier, TEID) used to receive a data packet sent by the second access network device. In FIG. 6, data between the first access network device and the evolved packet core device and located on the split bearer is all processed by using the first access network device. In this case, the first access network device is a data anchor. When an amount of data is excessively large and exceeds a processing capability of the first access network device, data processed by the second access network device is restricted by the processing capability of the first access network device, thereby reducing processing efficiency of a system.

Based on the foregoing descriptions, FIG. 7 is a schematic flowchart of a communications method according to an embodiment of this application.

Referring to FIG. 7, the method includes the following steps.

Step 701. A first access network device assigns, to the first access network device, a first TEID used to receive a data packet sent by a second access network device.

The first access network device may be an access network device whose data processing capability is lower than that of the second access network device. The data processing capability may be a data receiving and sending capability, a data parsing capability, or the like.

Step 702. The first access network device sends the first TEID to the second access network device.

Optionally, the first access network device further sends, to the second access network device, a second TEID that is used by an evolved packet core device to receive an uplink data packet at an S1 interface.

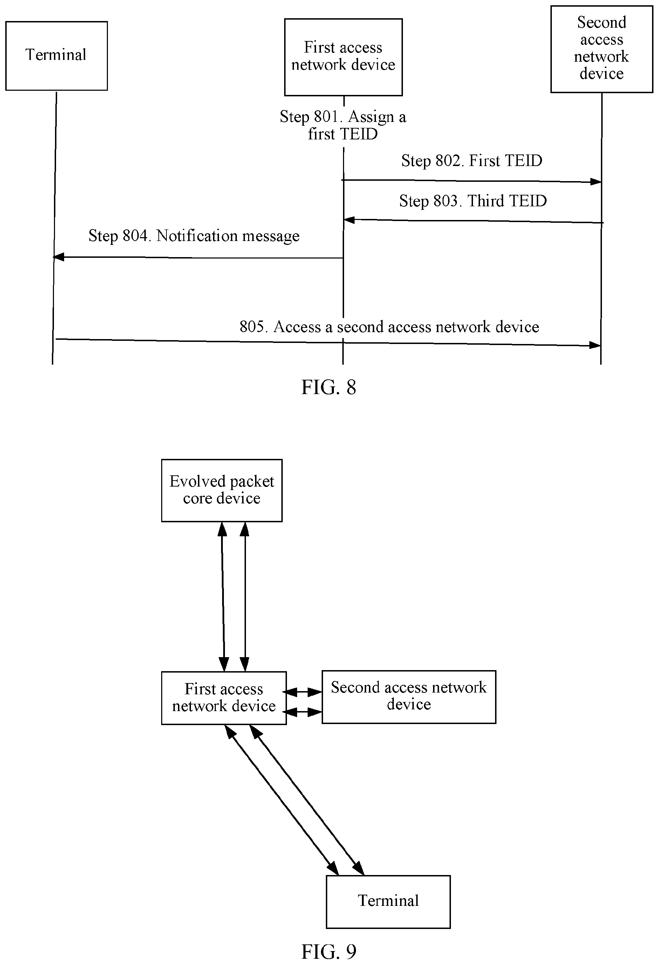

With reference to FIG. 7, FIG. 8 is a schematic flowchart of a communications method according to an embodiment of this application.

Step 801. A first access network device assigns a first TEID to the first access network device.

The first TEID assigned by the first access network device may be a TEID used to receive, at an X2 interface, a data packet sent by a second access network device.

Step 802. The first access network device sends the first TEID to a second access network device.

The first access network device may further send a second TEID to the second access network device.

In this step, the first access network device may indicate, to the second access network device by using the first TEID and the second TEID, that a bearer corresponding to the second TEID is a new type of split bearer at an S1 interface and between the second access network device and the evolved packet core device. In this case, after receiving the first TEID and the second TEID, the second access network device may determine that the bearer corresponding to the second TEID is the new type of split bearer at the S 1 interface and between the second access network device and the evolved packet core device.

Optionally, the first access network device may alternatively directly give an indication to the second access network device. In this case, the first access network device may send split bearer indication information to the second access network device. The split bearer indication information is used to indicate that the bearer corresponding to the second TEID is the new type of split bearer at the S1 interface and between the second access network device and the evolved packet core device.

Step 803. The first access network device receives a third TEID sent by the second access network device, where the third TEID is a TEID that is used by the second access network device to receive a data packet sent by the first access network device.

Optionally, the first access network device may further receive a fourth TEID sent by the second access network device, where the fourth TEID is a TEID that is used by the second access network device to receive a data packet sent by the evolved packet core device.

Correspondingly, the third TEID may be a TEID that is used by the second access network device to receive, at the X2 interface, a data packet sent by the first access network device; and the fourth TEID may be a TEID that is used by the second access network device to receive, at the S1 interface, a data packet sent by the evolved packet core device.

Step 804. The first access network device sends a notification message to a terminal, where the notification message is used to indicate that the terminal may transmit data to the second access network device.

Certainly, the first access network device may further send another wireless parameter to the terminal, for example, a type of the second device, a cell identifier of the second device, a cell frequency, a frame number, a subframe number, an initial access opportunity, or an initial access code. Details are not described herein.

Step 805. The terminal accesses the second access network device.

Subsequently, a path switch procedure may be performed, to change a split bearer between the first access network device and the evolved packet core device to a split bearer between the second access network device and the evolved packet core device.

For step 803 to step 805 and the path switch procedure, refer to a procedure in the prior art. Details are not described herein.

FIG. 9 is a schematic diagram of a network architecture in the prior art. In FIG. 9, a first access network device is a primary access network device, and a split bearer exists between the first access network device and an evolved packet core device. A second access network device is a secondary access network device, and a tunnel exists between the first access network device and the second access network device, in other words, the first access network device has a TEID used to receive a data packet sent by the second access network device. In FIG. 9, data between the first access network device and the evolved packet core device and located on the split bearer is all processed by using the first access network device. In this case, the first access network device is a data anchor. When an amount of data is excessively large and exceeds a processing capability of the first access network device, data processed by the second access network device is restricted by the processing capability of the first access network device, thereby reducing processing efficiency of a system.

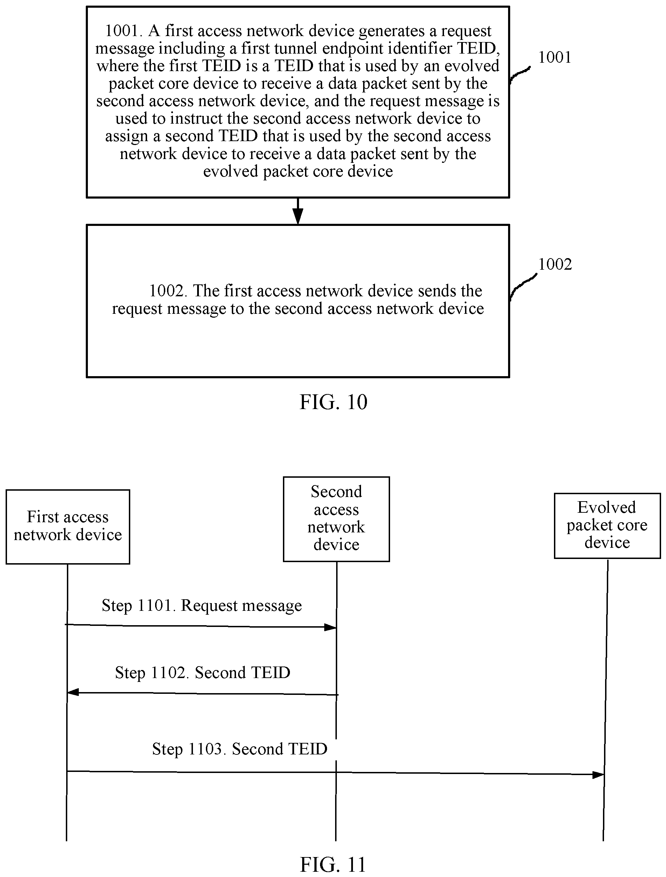

Based on the foregoing descriptions, FIG. 10 is a schematic flowchart of a communications method according to an embodiment of this application.

Referring to FIG. 10, the method includes the following steps.

Step 1001. A first access network device generates a request message including a first tunnel endpoint identifier TEID, where the first TEID is a TEID that is used by an evolved packet core device to receive a data packet sent by the second access network device, and the request message is used to instruct the second access network device to assign a second TEID that is used by the second access network device to receive a data packet sent by the evolved packet core device.

Optionally, the first access network device may be an access network device whose data processing capability is lower than that of the second access network device.

It should be noted that the first TEID and the second TEID in step 1001 are different from the first TEID and the second TEID in step 601 and step 602 in the procedure of FIG. 6.

In step 1001, the first TEID may be a TEID that is used by the evolved packet core device to receive an uplink data packet at an S 1 interface; and the second TEID may be a TEID that is used by the second access network device to receive, at the S1 interface, a data packet sent by the evolved packet core device.

Step 1002. The first access network device sends the request message to the second access network device.

After finishing sending the request message, the first access network device may receive the second TEID sent by the second access network device, and send the second TEID to the evolved packet core device.

With reference to FIG. 10, FIG. 11 is a schematic flowchart of a communications method according to an embodiment of this application.

Step 1101. A first access network device sends a request message including a first TEID to a second access network device.

Step 1102. The second access network device sends a second TEID to the first access network device.

Step 1103. The first access network device sends the second TEID to an evolved packet core device.

When a terminal registers with a network, a gateway of a 3GPP mobile network assigns an IP address to the terminal, but does not notify the terminal of the IP address. If the terminal simultaneously transmits N services, the gateway assigns different service identifiers to the N services. After generating a data packet, an application layer of the terminal adds the service identifier to a packet header, and transmits the data packet to the gateway. The gateway maps an IP address of a corresponding server based on the application identifier, and sends an IP packet including the IP address of the corresponding server and the IP address of the terminal to a corresponding application server.

According to the foregoing method, the terminal may implement data transmission without an IP, thereby reducing overheads of a mobile communications network.

Based on a same technical concept, an embodiment of this application further provides a communication apparatus, and the apparatus can perform the foregoing method embodiments.

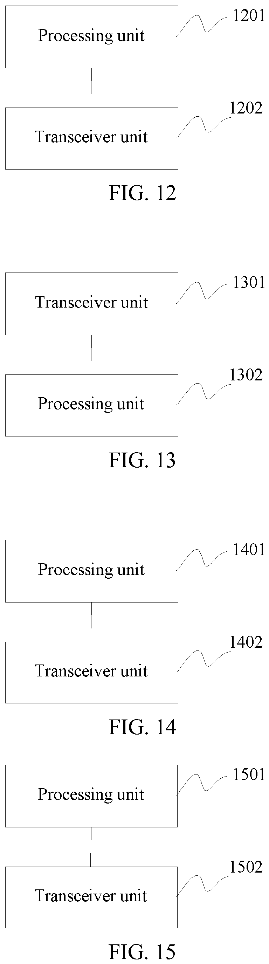

FIG. 12 is a schematic structural diagram of a communication apparatus according to an embodiment of this application.

Referring to FIG. 12, the apparatus includes:
a processing unit 1201, configured to generate first capability indication information, where the first capability indication information indicates that the terminal has a capability of processing out-of-order downlink data packets, or the first capability indication information indicates that the terminal has a capability of determining, based on a priority of a received downlink data packet, a priority of an uplink data packet corresponding to the downlink data packet, or the first capability indication information indicates that the terminal has a capability of processing out-of-order downlink data packets and a capability of determining, based on a priority of a received downlink data packet, a priority of an uplink data packet corresponding to the downlink data packet; and
a transceiver unit 1202, configured to send the first capability indication information to a first network device.

Optionally, the transceiver unit 1202 is further configured to:
receive a data packet priority configuration policy sent by a second network device, where the data packet priority configuration policy indicates that a priority of an uplink data packet of the terminal is a preset priority, or the data packet priority configuration policy indicates that a priority of an uplink data packet of the terminal is determined based on a priority of a downlink data packet of the terminal.

Optionally, the second network device is an access network device, and the transceiver unit 1202 is further configured to:
receive second capability indication information sent by the second network device, where the second capability indication information indicates that the access network device has a capability of processing out-of-order uplink data packets.

Optionally, the second network device is an application server or a core network device, and the transceiver unit 1202 is further configured to:
receive the second capability indication information sent by the access network device.

Optionally, the transceiver unit 1202 is further configured to:
after determining that a priority of a target data packet is adjusted from a first priority to a second priority, if determining that a data packet sequence number of a data packet before the target data packet has been assigned and has not been sent through an air interface, assign a data packet sequence number to the target data packet, and send the target data packet based on a priority of each data packet.

Optionally, the transceiver unit 1202 is further configured to:
after determining that a priority of a target data packet is adjusted from a first priority to a second priority, if determining that a data packet sequence number of a data packet before the target data packet has not been assigned, assign a data packet sequence number to the target data packet based on a priority of each data packet, and send the target data packet based on a data packet sequence number of each data packet.

Optionally, the transceiver unit 1202 is further configured to:
after determining that a priority of a target data packet is adjusted from a first priority to a second priority, adjust a priority of a flow or a radio bearer RB at which the target data packet is located to the second priority.

Optionally, the transceiver unit 1202 is further configured to:
receive data packet order configuration information sent by a core network device, where the data packet order configuration information indicates that among downlink data packets sent to the terminal, there are data packets that are sent out of order of data packet sequence numbers of the data packets.

Based on a same technical concept, an embodiment of this application further provides a communication apparatus, and the apparatus can perform the foregoing method embodiments.

FIG. 13 is a schematic structural diagram of a communication apparatus according to an embodiment of this application.

Referring to FIG. 13, the apparatus includes:
a transceiver unit 1301, configured to receive first capability indication information sent by a terminal, where the first capability indication information indicates that the terminal has a capability of processing out-of-order downlink data packets, or the first capability indication information indicates that the terminal has a capability of determining, based on a priority of a received downlink data packet, a priority of an uplink data packet corresponding to the downlink data packet, or the first capability indication information indicates that the terminal has a capability of processing out-of-order downlink data packets and a capability of determining, based on a priority of a received downlink data packet, a priority of an uplink data packet corresponding to the downlink data packet; and
a processing unit 1302, configured to send a downlink data packet to the terminal based on the first capability indication information.

Optionally, the apparatus is an application server; and
the transceiver unit 1301 is further configured to:
send submission order indication information to a core network device, where the submission order indication information indicates that downlink data packets sent to the terminal support out-of-order submission.

Optionally, the apparatus is an application server; and
the transceiver unit 1301 is further configured to:
send data packet order configuration information to the terminal, where the data packet order configuration information indicates that among downlink data packets sent to the terminal, there are data packets that are sent out of order of data packet sequence numbers of the data packets.

Optionally, the transceiver unit 1301 is further configured to:
send a data packet priority configuration policy to the terminal, where the data packet priority configuration policy indicates that a priority of an uplink data packet of the terminal is a preset priority, or the data packet priority configuration policy indicates that a priority of an uplink data packet of the terminal is determined based on a priority of a downlink data packet of the terminal.

Based on a same technical concept, an embodiment of this application further provides a communication apparatus, and the apparatus can perform the foregoing method embodiments.

FIG. 14 is a schematic structural diagram of a communication apparatus according to an embodiment of this application.

Referring to FIG. 14, the apparatus includes:
a processing unit 1401, configured to assign, to the first access network device, a first tunnel endpoint identifier TEID used to receive a data packet sent by a second access network device; and
a transceiver unit 1402, configured to send the first TEID to the second access network device.

Optionally, the transceiver unit 1402 is further configured to:
send, to the second access network device, a second TEID that is used by an evolved packet core device to receive an uplink data packet at an S1 interface.

Optionally, the transceiver unit 1402 is further configured to:
send split bearer indication information to the second access network device, where the split bearer indication information is used to indicate that a bearer corresponding to the second TEID is a new type of split bearer at the S1 interface and between the second access network device and the evolved packet core device.

Optionally, the transceiver unit 1402 is further configured to:
receive a third TEID sent by the second access network device, where the third TEID is a TEID that is used by the second access network device to receive a data packet sent by the first access network device.

Optionally, the transceiver unit 1402 is further configured to:
receive a fourth TEID sent by the second access network device, where the fourth TEID is a TEID that is used by the second access network device to receive a data packet sent by the evolved packet core device.

Based on a same technical concept, an embodiment of this application further provides a communication apparatus, and the apparatus can perform the foregoing method embodiments.

FIG. 15 is a schematic structural diagram of a communication apparatus according to an embodiment of this application.

Referring to FIG. 15, the apparatus includes:
a processing unit 1501, configured to generate a request message including a first tunnel endpoint identifier TEID, where the first TEID is a TEID that is used by an evolved packet core device to receive a data packet sent by the second access network device, and the request message is used to instruct the second access network device to assign a second TEID that is used by the second access network device to receive a data packet sent by the evolved packet core device; and
a transceiver unit 1502, configured to send the request message to the second access network device.

Optionally, the transceiver unit 1502 is further configured to:
receive the second TEID sent by the second access network device.

Optionally, the transceiver unit 1502 is further configured to:
send the second TEID to the evolved packet core device.

Based on a same technical concept, an embodiment of this application further provides a communication apparatus, and the apparatus can perform the foregoing method embodiments.

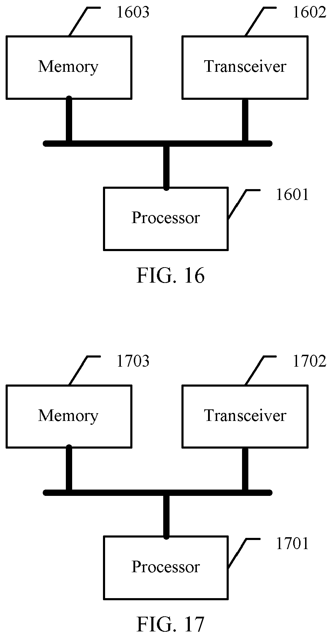

FIG. 16 is a schematic structural diagram of a communication apparatus according to an embodiment of this application.

Referring to FIG. 16, the apparatus includes a processor 1601, a transceiver 1602, and a memory 1603.

The memory 1603 is configured to store a computer instruction.

The processor 1601 is configured to generate first capability indication information, where the first capability indication information indicates that the terminal has a capability of processing out-of-order downlink data packets, or the first capability indication information indicates that the terminal has a capability of determining, based on a priority of a received downlink data packet, a priority of an uplink data packet corresponding to the downlink data packet, or the first capability indication information indicates that the terminal has a capability of processing out-of-order downlink data packets and a capability of determining, based on a priority of a received downlink data packet, a priority of an uplink data packet corresponding to the downlink data packet.

The transceiver 1602 is configured to send the first capability indication information to a first network device.

Optionally, the transceiver 1602 is further configured to:
receive a data packet priority configuration policy sent by a second network device, where the data packet priority configuration policy indicates that a priority of an uplink data packet of the terminal is a preset priority, or the data packet priority configuration policy indicates that a priority of an uplink data packet of the terminal is determined based on a priority of a downlink data packet of the terminal.

Optionally, the second network device is an access network device, and the transceiver 1602 is further configured to:
receive second capability indication information sent by the second network device, where the second capability indication information indicates that the access network device has a capability of processing out-of-order uplink data packets.

Optionally, the second network device is an application server or a core network device, and the transceiver 1602 is further configured to:
receive the second capability indication information sent by the access network device.

Optionally, the transceiver 1602 is further configured to:
after determining that a priority of a target data packet is adjusted from a first priority to a second priority, if determining that a data packet sequence number of a data packet before the target data packet has been assigned and has not been sent through an air interface, assign a data packet sequence number to the target data packet, and send the target data packet based on a priority of each data packet.

Optionally, the transceiver 1602 is further configured to:
after determining that a priority of a target data packet is adjusted from a first priority to a second priority, if determining that a data packet sequence number of a data packet before the target data packet has not been assigned, assign a data packet sequence number to the target data packet based on a priority of each data packet, and send the target data packet based on a data packet sequence number of each data packet.

Optionally, the transceiver 1602 is further configured to:
after determining that a priority of a target data packet is adjusted from a first priority to a second priority, adjust a priority of a flow or a radio bearer RB at which the target data packet is located to the second priority.

Optionally, the transceiver 1602 is further configured to:
receive data packet order configuration information sent by a core network device, where the data packet order configuration information indicates that among downlink data packets sent to the terminal, there are data packets that are sent out of order of data packet sequence numbers of the data packets.

Based on a same technical concept, an embodiment of this application further provides a communication apparatus, and the apparatus can perform the foregoing method embodiments.

FIG. 17 is a schematic structural diagram of a communication apparatus according to an embodiment of this application.

Referring to FIG. 17, the apparatus includes a processor 1701, a transceiver 1702, and a memory 1703.

The memory 1703 is configured to store a computer instruction.

The transceiver 1702 is configured to receive first capability indication information sent by a terminal, where the first capability indication information indicates that the terminal has a capability of processing out-of-order downlink data packets, or the first capability indication information indicates that the terminal has a capability of determining, based on a priority of a received downlink data packet, a priority of an uplink data packet corresponding to the downlink data packet, or the first capability indication information indicates that the terminal has a capability of processing out-of-order downlink data packets and a capability of determining, based on a priority of a received downlink data packet, a priority of an uplink data packet corresponding to the downlink data packet.

The processor 1701 is configured to send a downlink data packet to the terminal based on the first capability indication information.

Optionally, the apparatus is an application server; and
the transceiver 1702 is further configured to:
send submission order indication information to a core network device, where the submission order indication information indicates that downlink data packets sent to the terminal support out-of-order submission.

Optionally, the apparatus is an application server; and
the transceiver 1702 is further configured to:
send data packet order configuration information to the terminal, where the data packet order configuration information indicates that among downlink data packets sent to the terminal, there are data packets that are sent out of order of data packet sequence numbers of the data packets.

Optionally, the transceiver 1702 is further configured to:
send a data packet priority configuration policy to the terminal, where the data packet priority configuration policy indicates that a priority of an uplink data packet of the terminal is a preset priority, or the data packet priority configuration policy indicates that a priority of an uplink data packet of the terminal is determined based on a priority of a downlink data packet of the terminal.

Based on a same technical concept, an embodiment of this application further provides a communication apparatus, and the apparatus can perform the foregoing method embodiments.

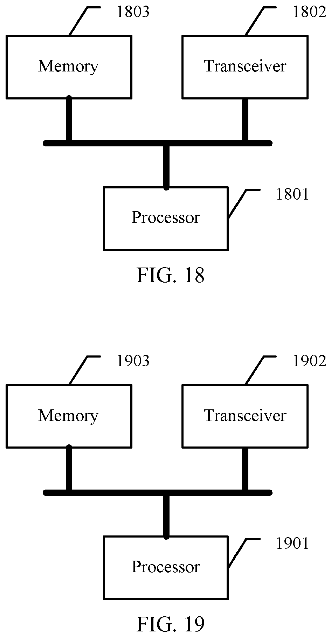

FIG. 18 is a schematic structural diagram of a communication apparatus according to an embodiment of this application.

Referring to FIG. 18, the apparatus includes a processor 1801, a transceiver 1802, and a memory 1803.

The memory 1803 is configured to store a computer instruction.

The processor is configured to assign, to the first access network device, a first tunnel endpoint identifier TEID used to receive a data packet sent by a second access network device.

The transceiver is configured to send the first TEID to the second access network device.

Optionally, the transceiver 1802 is further configured to:
send, to the second access network device, a second TEID that is used by an evolved packet core device to receive an uplink data packet at an S1 interface.

Optionally, the transceiver 1802 is further configured to:
send split bearer indication information to the second access network device, where the split bearer indication information is used to indicate that a bearer corresponding to the second TEID is a new type of split bearer at the S1 interface and between the second access network device and the evolved packet core device.

Optionally, the transceiver 1802 is further configured to:
receive a third TEID sent by the second access network device, where the third TEID is a TEID that is used by the second access network device to receive a data packet sent by the first access network device.

Optionally, the transceiver 1802 is further configured to:
receive a fourth TEID sent by the second access network device, where the fourth TEID is a TEID that is used by the second access network device to receive a data packet sent by the evolved packet core device.

Based on a same technical concept, an embodiment of this application further provides a communication apparatus, and the apparatus can perform the foregoing method embodiments.

FIG. 19 is a schematic structural diagram of a communication apparatus according to an embodiment of this application.

Referring to FIG. 19, the apparatus includes a processor 1901, a transceiver 1902, and a memory 1903.

The memory 1903 is configured to store a computer instruction.

The processor is configured to generate a request message including a first tunnel endpoint identifier TEID, where the first TEID is a TEID that is used by an evolved packet core device to receive a data packet sent by the second access network device, and the request message is used to instruct the second access network device to assign a second TEID that is used by the second access network device to receive a data packet sent by the evolved packet core device.

The transceiver is configured to send the request message to the second access network device.

Optionally, the transceiver is further configured to:
receive the second TEID sent by the second access network device.

Optionally, the transceiver is further configured to:
send the second TEID to the evolved packet core device.

In FIG. 16 to FIG. 19, the transceiver may be a wired transceiver, a wireless transceiver, or a combination thereof. The wired transceiver may be, for example, an Ethernet interface. The Ethernet interface may be an optical interface, an electrical interface, or a combination thereof. The wireless transceiver may be, for example, a wireless local area network transceiver, a cellular network transceiver, or a combination thereof. The processor may be a central processing unit (English: central processing unit, CPU for short), a network processor (English: network processor, NP for short), or a combination of a CPU and an NP. The processor may further include a hardware chip. The hardware chip may be an application-specific integrated circuit (English: application-specific integrated circuit, ASIC for short), a programmable logic device (English: programmable logic device, PLD for short), or a combination thereof. The PLD may be a complex programmable logical device (English: complex programmable logic device, CPLD for short), a field-programmable gate array (English: field-programmable gate array, FPGA for short), a generic array logic (English: generic array logic, GAL for short), or any combination thereof. The memory may include a volatile memory (English: volatile memory), for example, a random-access memory (English: random-access memory, RAM for short). The memory may further include a non-volatile memory (English: non-volatile memory), for example, a read-only memory (English: read-only memory, ROM for short), a flash memory (English: flash memory), a hard disk drive (English: hard disk drive, HDD for short), or a solid-state drive (English: solid-state drive, SSD for short). The memory may further include a combination of the foregoing memories.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of this application have been described, persons skilled in the art can make changes and modifications to these embodiments once they learn the basic inventive concept. Therefore, the following claims are intended to be construed as to cover the preferred embodiments and all changes and modifications falling within the scope of this application.

Obviously, persons skilled in the art can make various modifications and variations to this application without departing from the scope of this application. This application is intended to cover these modifications and variations provided that they fall within the protection scope defined by the following claims.

## Claims

1. A communications method, comprising:
generating, by a terminal, first capability indication information, wherein the first capability indication information indicates that the terminal has a capability of processing out-of-order downlink data packets, or the first capability indication information indicates that the terminal has a capability of determining, based on a priority of a received downlink data packet, a priority of an uplink data packet corresponding to the downlink data packet, or the first capability indication information indicates that the terminal has a capability of processing out-of-order downlink data packets and a capability of determining, based on a priority of a received downlink data packet, a priority of an uplink data packet corresponding to the downlink data packet; and
sending, by the terminal, the first capability indication information to a first network device.

2. The method according to claim 1, further comprising:
receiving, by the terminal, a data packet priority configuration policy sent by a second network device, wherein the data packet priority configuration policy indicates that a priority of an uplink data packet of the terminal is a preset priority, or the data packet priority configuration policy indicates that a priority of an uplink data packet of the terminal is determined based on a priority of a downlink data packet of the terminal.

3. The method according to claim 2, wherein the second network device is an access network device, and the method further comprises:
receiving, by the terminal, second capability indication information sent by the second network device, wherein the second capability indication information indicates that the access network device has a capability of processing out-of-order uplink data packets.

4. The method according to claim 3, further comprising:
after the terminal determines that a priority of a target data packet is adjusted from a first priority to a second priority, if the terminal determines that a data packet sequence number of a data packet before the target data packet has been assigned and has not been sent through an air interface, assigning, by the terminal, a data packet sequence number to the target data packet, and sending, by the terminal, the target data packet based on a priority of each data packet.

5. The method according to claim 3, further comprising:
after the terminal determines that a priority of a target data packet is adjusted from a first priority to a second priority, if the terminal determines that a data packet sequence number of a data packet before the target data packet has not been assigned, assigning, by the terminal, a data packet sequence number to the target data packet based on a priority of each data packet, and sending, by the terminal, the target data packet based on a data packet sequence number of each data packet.

6. The method according to claim 1 or 2, further comprising:
after the terminal determines that a priority of a target data packet is adjusted from a first priority to a second priority, adjusting a priority of a flow or a radio bearer RB at which the target data packet is located to the second priority.

7. The method according to any one of claims 1 to 6, further comprising:
receiving, by the terminal, data packet order configuration information sent by a core network device, wherein the data packet order configuration information indicates that among downlink data packets sent to the terminal, there are data packets that are sent out of order of data packet sequence numbers of the data packets.

8. A communications method, comprising:
receiving, by a first network device, first capability indication information sent by a terminal, wherein the first capability indication information indicates that the terminal has a capability of processing out-of-order downlink data packets, or the first capability indication information indicates that the terminal has a capability of determining, based on a priority of a received downlink data packet, a priority of an uplink data packet corresponding to the downlink data packet, or the first capability indication information indicates that the terminal has a capability of processing out-of-order downlink data packets and a capability of determining, based on a priority of a received downlink data packet, a priority of an uplink data packet corresponding to the downlink data packet; and
sending, by the first network device, a downlink data packet to the terminal based on the first capability indication information.

9. The method according to claim 8, wherein the first network device is an application server; and
after the receiving, by a first network device, first capability indication information sent by a terminal, the method further comprises:
sending, by the first network device, submission order indication information to a core network device, wherein the submission order indication information indicates that downlink data packets sent to the terminal support out-of-order submission.

10. The method according to claim 8 or 9, wherein the first network device is an application server; and
after the receiving, by a first network device, first capability indication information sent by a terminal, the method further comprises:
sending, by the first network device, data packet order configuration information to the terminal, wherein the data packet order configuration information indicates that among downlink data packets sent to the terminal, there are data packets that are sent out of order of data packet sequence numbers of the data packets.

11. The method according to claim 9, further comprising:
sending, by the first network device, a data packet priority configuration policy to the terminal, wherein the data packet priority configuration policy indicates that a priority of an uplink data packet of the terminal is a preset priority, or the data packet priority configuration policy indicates that a priority of an uplink data packet of the terminal is determined based on a priority of a downlink data packet of the terminal.

12. A communications method, comprising:
assigning, by a first access network device to the first access network device, a first tunnel endpoint identifier TEID used to receive a data packet sent by a second access network device; and
sending, by the first access network device, the first TEID to the second access network device.

13. The method according to claim 12, further comprising:
sending, by the first access network device to the second access network device, a second TEID that is used by an evolved packet core device to receive an uplink data packet at an S1 interface.

14. A communications method, comprising:
generating, by a first access network device, a request message comprising a first tunnel endpoint identifier TEID, wherein the first TEID is a TEID that is used by an evolved packet core device to receive a data packet sent by the second access network device, and the request message is used to instruct the second access network device to assign a second TEID that is used by the second access network device to receive a data packet sent by the evolved packet core device; and
sending, by the first access network device, the request message to the second access network device.

15. A communication apparatus, comprising:
a processing unit, configured to generate first capability indication information, wherein the first capability indication information indicates that the terminal has a capability of processing out-of-order downlink data packets, or the first capability indication information indicates that the terminal has a capability of determining, based on a priority of a received downlink data packet, a priority of an uplink data packet corresponding to the downlink data packet, or the first capability indication information indicates that the terminal has a capability of processing out-of-order downlink data packets and a capability of determining, based on a priority of a received downlink data packet, a priority of an uplink data packet corresponding to the downlink data packet; and
a transceiver unit, configured to send the first capability indication information to a first network device.

16. The apparatus according to claim 15, wherein the transceiver unit is further configured to:
receive a data packet priority configuration policy sent by a second network device, wherein the data packet priority configuration policy indicates that a priority of an uplink data packet of the terminal is a preset priority, or the data packet priority configuration policy indicates that a priority of an uplink data packet of the terminal is determined based on a priority of a downlink data packet of the terminal.

17. The apparatus according to claim 16, wherein the second network device is an access network device, and the transceiver unit is further configured to:
receive second capability indication information sent by the second network device, wherein the second capability indication information indicates that the access network device has a capability of processing out-of-order uplink data packets.

18. The apparatus according to claim 16 or 17, wherein the transceiver unit is further configured to:
after determining that a priority of a target data packet is adjusted from a first priority to a second priority, if determining that a data packet sequence number of a data packet before the target data packet has been assigned and has not been sent through an air interface, assign a data packet sequence number to the target data packet, and send the target data packet based on a priority of each data packet.

19. The apparatus according to claim 16 or 17, wherein the transceiver unit is further configured to:
after determining that a priority of a target data packet is adjusted from a first priority to a second priority, if determining that a data packet sequence number of a data packet before the target data packet has not been assigned, assign a data packet sequence number to the target data packet based on a priority of each data packet, and send the target data packet based on a data packet sequence number of each data packet.

20. The apparatus according to any one of claims 15 to 19, wherein the transceiver unit is further configured to:
receive data packet order configuration information sent by a core network device, wherein the data packet order configuration information indicates that among downlink data packets sent to the terminal, there are data packets that are sent out of order of data packet sequence numbers of the data packets.
